# EUROPEAN PATENT APPLICATION

(11) **EP 3 262 999 A1**
(43) Date of publication of application: **03.01.2018**
(21) Application number: 16177613.3
(22) Date of filing: 01.07.2016
(51) Int. Cl.: A47J 43/044, A47J 43/08

(54) **A MIXER**

(71) Applicant: DKB Household UK Limited, Hampshire GU14 7UE (GB)
(72) Inventor: HUDSON, Thomas William, Hampshire, GU51 3EG (GB); OZTURK, Osman Gokhan, South Bucks, UB9 5JP (GB)
(74) Representative: Mannion, Daniel James

(57) **Abstract**

A handheld apparatus for mixing food product comprising a manual input and a drive means comprising a drive input, wherein the manual input is operatively connected to the drive input to actuate the drive means, the drive means further comprising first and second drive outputs operatively coupled to the drive input and being arranged to simultaneously rotate the first drive output in a first direction and rotate the second drive output in a second direction and rotate both drive outputs in the second direction about the central axis of the apparatus, such that the number of revolutions completed by the first drive output is less than the number of revolutions completed by the second drive output each time the drive outputs complete a revolution about the central axis.

## Description

This invention generally relates to an apparatus for mixing food products and / or liquids. In particular, the invention relates to a manually operated, handheld mixing apparatus.

### BACKGROUND

Mixers are widely used as convenient means for mixing food products and / or liquids such as eggs, flour, milk, butter and the like. Many different types of mixers are known including handheld mechanical mixers, such as an eggbeater, handheld electric mixers and stand mixers. Mechanical mixers are manually operated to rotate two beaters to provide a mixing action. However, such a mixing action is not always effective, particularly when trying to mix wet and dry food products. Handheld electric mixers are capable of rotating the beaters at higher speeds, albeit with the same mixing action as mechanical mixers. However, the inclusion of a motor means that they are heavier than mechanical mixers, which can make them cumbersome to use. Moreover, handheld electric mixers, of course, need to be connected to a power supply, which makes them less convenient when compared to mechanical mixers. Stand mixers typically employ a planetary mixing action, which is more effective when compared to the mixing action used by mechanical and electric mixers. However, stand mixers are comparatively large, and so are not as convenient as handheld mixers.

This invention seeks to overcome or substantially mitigate the foregoing problems with known mixers.

### STATEMENTS OF INVENTION

According to an aspect of the invention, there is provided a handheld apparatus for mixing food product comprising a manual input, that is an input configured to be manually operated, and a drive means comprising a drive input, wherein the manual input is operatively connected to the drive input to actuate the drive means, the drive means further comprising first and second drive outputs operatively coupled to the drive input, each output being adapted to hold the spindle of a beater, wherein the drive means is arranged to simultaneously rotate the first drive output in a first direction and rotate the second drive output in a second direction and rotate both drive outputs in the second direction about the central axis of the apparatus, such that the number of revolutions completed by the first drive output is less than the number of revolutions completed by the second drive output each time the drive outputs complete a revolution about the central axis. The combination of the opposing rotational movements of the drive outputs together with their collective rotation about the central axis of the apparatus means that when connected to the drive outputs, the beaters function to draw in the food product to be mixed. Moreover, the relative tangential velocity at any point on the beater heads constantly varies. This mixing action improves the mixing efficiency of the apparatus when compared to known mechanical mixers, whilst also achieving a compact design that is convenient for a user.

Preferably, the drive outputs are diametrically opposed.

Preferably, the drive outputs are separated by a distance meaning the rotational planes of the beater heads of the beaters overlay when the beaters are held in the drive outputs. More preferably, the distance separating the drive outputs is 28mm and the maximum diameter of each beater head is 40mm.

Preferably, the drive outputs are pinion gears and the drive means further comprises one or more idler gears engaged with the second drive output.

Preferably, the drive means further comprises an annular gear engaged with the first drive output and the one or more idler gears.

Preferably, the first drive output and the one or more idler gears are arranged to move around the annular gear.

Preferably, the positions of the first drive output and the one or more idler gears are fixed with respect to the drive input such that that movement of the drive input with respect to the annular gear causes the first drive output and the one or more idler gears to move around the annular gear.

Preferably, the manual input and the drive input are connected by two bevel gears. More preferably, the two bevel gears have a gear ratio of 1/3.

Preferably, the gear ratio between the annular gear and the drive outputs is 1/3.

Preferably the apparatus further comprises a support bar arranged to extend around the beaters when the beaters are held in the drive outputs.

### LIST OF DRAWINGS

The above and other aspects of the invention will now be described, by way of example only, with reference to the accompanying drawings, in which:
FIG. 1 is a perspective view of a mixer in accordance with the invention;
FIG. 2 is a perspective part-sectional view of the mixer of FIG. 1;
FIG. 3 is a top plan view of a drive means for the mixer of FIG. 1; and,
FIG. 4 is a bottom plan view of the mixer of FIG. 1.

In the drawings, like parts are denoted by like reference numerals.

### SPECIFIC DESCRIPTION

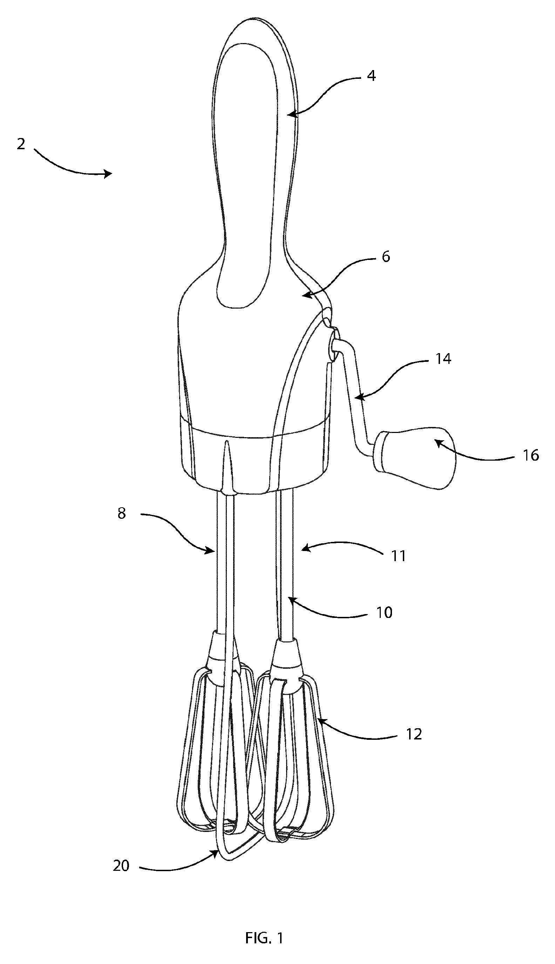

FIG. 1 shows an embodiment of a mixer, generally designated by 2, in accordance with the invention. The mixer 2 comprises a handle 4 positioned at the upper end of a generally annular housing 6. The handle 4 includes sections made of a thermoplastic elastomer in order to provide additional grip for a user. Two identical removable rotary beaters, designated by 8 and 11, axially extend from a base 9 of a drive means, generally designate by 18, positioned at the lower end of the annular housing 6. Each beater 8, 11 includes a beater spindle 10 and a beater head 12 connected to the end of the beater spindle 10 remote from the housing 5. In the embodiment shown, each beater head 12 is formed from two loops, which are arranged to substantially axially extend from the beater spindle 10 and terminate at the point at which the two loops cross perpendicularly with respect to each other. However, it will be apparent to those skilled in the art that the beater heads 12 could be formed from a single loop, or three or more loops. A removable support bar 20 extending around the beaters 8, 11 is also provided allowing the user to rest the mixer 2 on a surface, such as the floor of a bowl, during use.

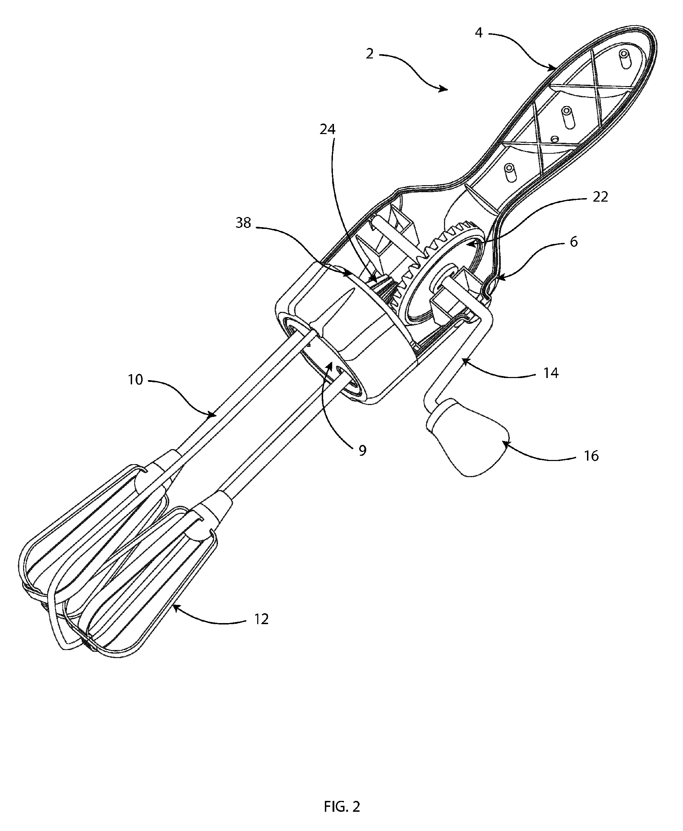

With reference to FIG. 2, the mixer 2 further comprises a rotatable crank arm 14, a section of which is arranged to extend horizontally across the interior of the housing 6, while the other end is connected to a grip 16. The grip 16 is configured to rotate about the end of the crank arm 14 for the user's convenience when rotating the crank arm 14. Two bevel gears 22, 24 are located in the interior of the housing 6. The first bevel gear 22 is fixedly mounted on the horizontal section of the crank arm 14. That is, the first bevel gear 22 is fixed with respect to the cranked arm 14 so as to prevent relative moment therebetween. The second bevel gear 24 is fixedly mounted on a central shaft 26 extending along a central axis of the mixer 2. The central shaft 26 is substantially perpendicular to the horizontal section of the crank arm 14 extending across the interior of the housing 6.

In use, the user holds the mixer 2 by the handle 4 with one hand and uses the grip 16 to rotate the crank arm 14 with their other hand. The rotary motion of the crank arm 14 is transferred by the bevel gears 22, 24 to the central shaft 26. The rotary motion of the central shaft 26, in turn, drives the drive means 18 to rotate the beaters 8, 11 about their respective axes. That is, the central shaft 26 functions as the input for the drive means 18. The first bevel gear 22 comprises 30 teeth and the second bevel gear 24 comprises 10 teeth resulting in a gear ratio of 1/3. That is, the crank arm 14 must make one revolution to turn the second bevel gear 24, together with the central shaft 26, three times.

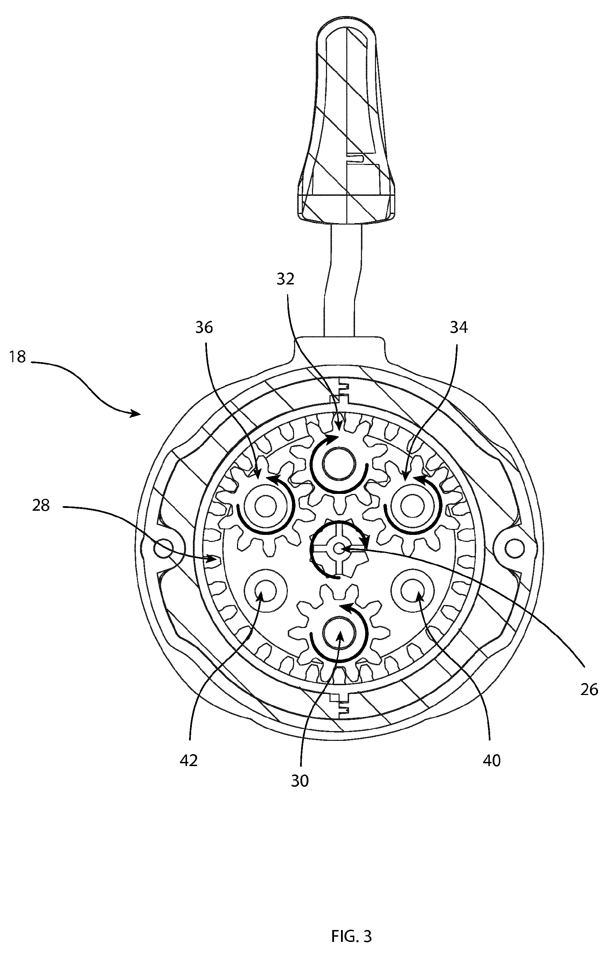

FIG. 3 shows the drive means 18 located in the lower section of the housing 6 comprising the central shaft 26, the base 9 and an annular gear 28 fixed to the internal surface of a stationary gear housing 38. The annular gear 28 is concentrically aligned with the central shaft 26. The drive means 18 further comprises four pinion gears 30, 32, 34, 36. The first and second gears 30, 32 function as the output gears for the drive means 18, each comprising a socket member (not shown) adapted to hold one beater spindle 10 in a rotationally fixed relationship. In the embodiment shown, the first and second gears 30, 32 are adapted to receive the beater spindle 10 of the first and second beaters 8, 11 respectively. The third and fourth gears 34, 36 function as idler gears. The teeth of the first gear 30 directly engage or mesh with the teeth of the annular gear 28. While the teeth of the second gear 32 engage with the teeth of the third and fourth gears 34, 36 which, in turn, engage with teeth of the annular gear 28 to establish a gear train between the annular gear 28 and the second gear 32. That is, there is no direct engagement between the second gear 32 and the annular gear 28. The third and fourth gears 34, 36 function to reverse the rotation of the second gear 32 with respect to the rotation of the first gear 30 and also stabilise the second gear 32 when it is rotating. In the embodiment shown, the second gear 32 is positioned above the plane of the annular gear 28. However, it will be apparent to those skilled in the art that the second gear 32 could be positioned below the plane of the annular gear 28.

The drive means 18 further comprises two posts 40, 42 that function to maintain the vertical distance between the base 9 and the top of the gear housing 38 of the drive means 18. The base 9 is connected to the central shaft 26, preventing relative rotation therebetween. That is, the central shaft 26 and the base 9 are configured to rotate about the central axis of the mixer 2 at the same angular velocity when the crank arm 14 is rotated. The gears 30, 32, 34, 36 are mounted to the base 9 of the drive means 18, and so are held in a fixed positional relationship with respect to the base 9. Accordingly, the gears 30, 32, 34, 36 collectively rotate about the central axis of the mixer 2 in an orbital path when the crank arm 14 is rotated. The collective movement of the gears 30, 32, 34, 36 through the orbital path, with respect to the annular gear 28, causes the meshing gears, that is, the first, third and fourth gears 30, 34, 36, to move around the annular gear 28 and, consequently, simultaneously rotate about their respective axis. The second gear 32 is also caused to simultaneously rotate about its axis while moving through the orbital path by its meshing with the third and fourth gears 34, 36.

From the viewpoint shown in FIG. 3, the central shaft 26, and so the base 9,is arranged to rotate in a clockwise direction. Accordingly, the first, second, third and fourth gears 30, 32, 34, 36 are also configured to move collectively through the orbital path, together with the posts 40, 42, in a clockwise direction. This movement causes the first, third and fourth gears 30, 34, 36 to rotate about their respective axis in an anticlockwise direction, while the second gear 32 rotates in a clockwise direction. It will be apparent to those skilled in the art that the central shaft 26 could equally be rotated in an anticlockwise direction, which would reverse the direction in which the gears 30, 32, 34, 36 rotate. In the embodiment shown, the annular gear 28 has 30 teeth and the first, second, third and fourth gears 30, 32, 34, 36 each have 10 teeth. This results in a gear ratio of 1/3 between the annular gear 28 and the first and second gears 30, 32. That is, the first and second gears are configured to revolve three times each time they move around the annular gear 28 based on the gear ratio only.

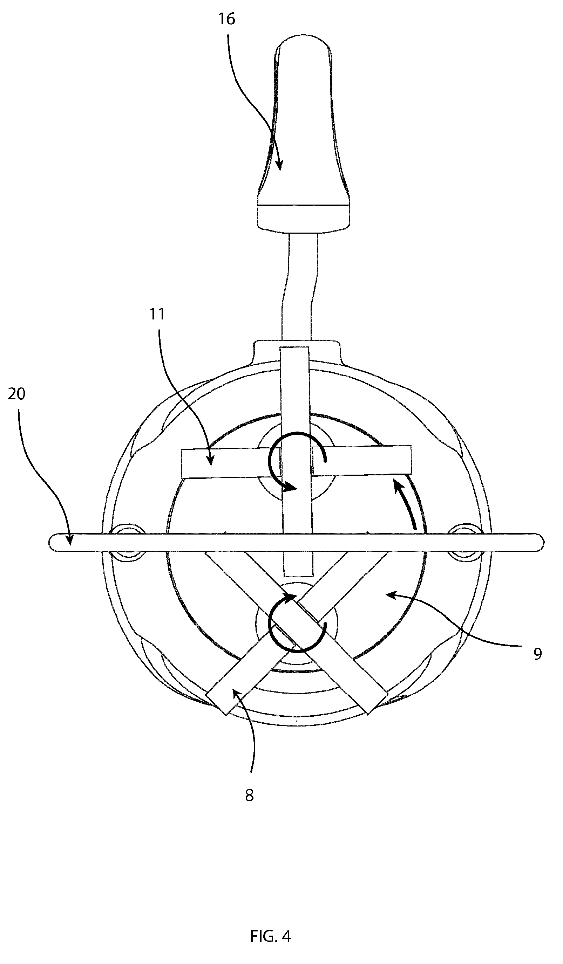

The first and second gears 30, 32 are positioned diametrically opposite each other within the housing 6 and are separated by a distance that is less than the maximum width, but greater than half the maximum width of the beater heads 12. In the embodiment shown, the maximum diameter of the beater heads 12 is 40mm and the distance separating the first and second gears 30, 32 is 28mm. This arrangement creates a region in which the respective rotational planes of the beater heads 12 cross or partially overlay such that the loops of the beater heads 12 are interposed or intercalated when the beater spindles 10 are inserted into their respective socket member, as shown in FIG. 4. From the view point shown in FIG. 4, which is opposite to the view point of FIG. 3, the base 9 and the second beater 11 are configured to rotate in an anticlockwise direction, and the first beater 8 is configured to rotate in a clockwise direction. The anticlockwise rotation of the base 9, causing the orbital rotation of the beaters 8, 11, coupled with the simultaneous rotation of the first and second beaters 8, 11 about their respective axis has the effect of relatively decreasing and increasing the number of revolutions completed by the first and second beaters 8, 11 respectively per revolution of the base 9. In the embodiment shown, the first and second beaters 8, 11 are arranged to revolve two and four times respectively for every revolution completed by the base 9.

The opposing rotational movements of the beaters 8, 11 about their respective axis function to draw food product to be mixed between the beaters 8, 11 and into the region where the rotational planes of the beater heads 12 overlay. The orbital movement of the beaters 8, 11 also functions to draw the food product between the beaters 8, 11, in addition to constantly varying the relative tangential velocity at any point on the loops of the beater heads 12. This exposes the food product to fluctuating shearing forces created by the loops of the beater heads 12 moving through the region, creating a turbulent area for mixing the food product. This improved mixing action means that the user can hold the mixer 2 stationary with respect to the vessel containing the food product to be mixed without sacrificing mixing efficiency.

It will be apparent to those skilled in the art that various modifications may be made to the described embodiment without departing from the scope of the invention as defined by the accompanying claims.

## Claims

1. A handheld apparatus for mixing food product comprising:
a manual input; and,
a drive means comprising a drive input, wherein the manual input is operatively connected to the drive input to actuate the drive means;
the drive means further comprising first and second drive outputs operatively coupled to the drive input, each output being adapted to hold the spindle of a beater,
wherein the drive means is arranged to simultaneously rotate the first drive output in a first direction and rotate the second drive output in a second direction and rotate both drive outputs in the second direction about the central axis of the apparatus, such that the number of revolutions completed by the first drive output is less than the number of revolutions completed by the second drive output each time the drive outputs complete a revolution about the central axis.

2. An apparatus according to claim 1, wherein the drive outputs are diametrically opposed.

3. An apparatus according to claims 1 or 2, wherein the drives outputs are separated by a distance meaning the rotational planes of the beater heads of the beaters overlay when the beaters are held in the drive outputs.

4. An apparatus according to any preceding claim, wherein the drive outputs are pinion gears and the drive means further comprises an idler gear engaged with the second drive output.

5. An apparatus according to claim 4, wherein the drive means further comprises a second idler gear engaged with the second drive output.

6. An apparatus according to claim 4, wherein the drive means further comprises an annular gear engaged with the first drive output and the idler gear.

7. An apparatus according to claim 5, wherein the drive means further comprises an annular gear engaged with the first drive output and the first and second idler gears.

8. An apparatus according to claim 6, wherein the first drive output and the idler gear are arranged to move around the annular gear.

9. An apparatus according to claim 7, wherein the first drive output and the first and second idler gears are arranged to move around the annular gear.

10. An apparatus according to claim 8, wherein the positions of the first drive output and the idler gear are fixed with respect to the drive input such that that movement of the drive input with respect to the annular gear causes the first drive output and the idler gear to move around the annular gear.

11. An apparatus according to claim 9, wherein the positions of the first drive output and the first and second idler gears are fixed with respect to the drive input such that that movement of the drive input with respect to the annular gear causes the first drive output and the first and second idler gears to move around the annular gear.

12. An apparatus according to any preceding claim, wherein the manual input and the drive input are connected by two bevel gears.

13. An apparatus according to claim 12, wherein the two bevel gears have a gear ratio of 1 /3.

14. An apparatus according to any one of claims 6 to 13, wherein the gear ratio between the annular gear and the drive outputs is 1/3.

15. An apparatus according to any preceding claim, further comprising a support bar arranged to extend around the beaters when the beaters are held in the drive outputs.
